# FASCICULE DE BREVET EUROPEEN

(11) **EP 4 153 900 B1**
(45) Date de publication et mention de la délivrance du brevet: **08.10.2025**
(21) Numéro de dépôt: 21727820.9
(22) Date de dépôt: 19.05.2021
(51) Int. Cl.: F17C 6/00

(54) **DISPOSITIF ET PROCÉDÉ DE TRANSFERT DE FLUIDE CRYOGÉNIQUE**
VORRICHTUNG UND VERFAHREN ZUR ÜBERTRAGUNG EINER KRYOGENEN FLÜSSIGKEIT
DEVICE AND METHOD FOR TRANSFERRING CRYOGENIC FLUID

(30) Priorité: 20.05.2020 FR 2005144
(43) Date de publication de la demande: 29.03.2023
(73) Titulaire: L'AIR LIQUIDE, SOCIETE ANONYME POUR L'ETUDE ET L'EXPLOITATION DES PROCEDES GEORGES CLAUDE, 75321 Paris (FR)
(72) Inventeur: ALLIDIERES, Laurent, 75321 PARIS (FR); FAYER, Thomas, 38360 Sassenage (FR); BENISTAND-HECTOR, Cyril, 38360 Sassenage (FR)
(74) Mandataire: Air Liquide
(86) Numéro de dépôt international: PCT/EP2021/063229
(87) Numéro de publication internationale: WO 2021/233964

(56) Documents cités:
- WO-A1-2019/064189
- WO-A2-03/085315
- DE-A1- 19 916 563
- US-A- 5 365 981
- US-A1- 2002 104 581
- US-A1- 2017 030 523
- US-B2- 6 631 615

## Description

L'invention concerne un dispositif et un procédé de transfert de fluide cryogénique d'un stockage de gaz liquéfié.

Un tel procédé est connu de US5365981A.

L'invention concerne plus particulièrement un dispositif de transfert de fluide cryogénique conformément à la revendication 10.

Pour remplir un réservoir d'hydrogène liquide à partir d'un réservoir mobile (semi-remorque) on utilise généralement un système de livraison de liquide par différence de pression. Typiquement, le stockage à remplir est à une pression comprise entre 1,0 et 13 bara (typiquement 3 bara) et le liquide contenu dans le réservoir de livraison est à une pression comprise entre 1,0 bara et 13 bara. Pour réaliser ce transfert par différentiel de pression, dans la plupart des cas, il faut d'abord pressuriser le réservoir de la semi-remorque de livraison à une pression typiquement supérieure de 1 barg par rapport à la pression du stockage fixe à remplir.

Actuellement un réchauffeur atmosphérique est généralement placé sous la semi-remorque de livraison pour permettre la pressurisation et le transfert de son contenu vers un réservoir récepteur.

Ce système présente plusieurs inconvénients. Ainsi, les performances sont difficilement maîtrisées car liées aux conditions météorologiques (température, vent, humidité). De plus, la stratification engendrée dans le ciel gazeux de la semi-remorque de livraison (augmentation de la température du gaz avec l'altitude) aura tendance à réchauffer l'hydrogène liquide livré au client (d'autant plus en cas de livraisons multiples). Ainsi, l'hydrogène livré est de moins bonne qualité. De plus, la nécessité de mettre le réservoir de la semi-remorque de livraison en pression avant de commencer le transfert peut durer de 15min à 60min selon niveau dans le réservoir de livraison.

D'autres solutions connues utilisent une pompe pour transférer du liquide d'un stockage à l'autre. Cependant, l'utilisation d'une pompe nécessite de prévoir un réchauffeur atmosphérique pour compenser le volume liquide sortant par du gaz issu du réchauffeur.

De plus, les technologies actuelles de pompe de transfert impliquent d'autres inconvénients. Ainsi, en pompant du liquide, la pompe ajoute de la chaleur au fluide à transférer, et peut subir des endommagements par cavitation au sein du liquide cryogénique avec une diminution du débit pompé. En outre, la pompe fournit un débit important entrant dans le réservoir client. De ce fait**,** une quantité importante du gaz doit être mise à l'évent pour laisser place à ce volume liquide entrant.

Un but de la présente invention est de pallier tout ou partie des inconvénients de l'art antérieur relevés ci-dessus.

A cette fin, le dispositif selon l'invention, est essentiellement caractérisé en ce que la seconde conduite de transfert comprend une pompe comprenant une entrée reliée au premier réservoir et une sortie reliée au second réservoir et en ce que la pompe et la au moins une vanne de la première conduite sont configurées pour assurer une mise en relation fluidique des parties supérieures des premier et second réservoirs par ouverture de la au moins une vanne lors d'un transfert de liquide du premier réservoir vers le second réservoir par la pompe.

Par ailleurs, des modes de réalisation de l'invention peuvent comporter l'une ou plusieurs des caractéristiques suivantes :
- la seconde conduite comprend une extrémité reliant la partie inférieure du premier réservoir à la partie inférieure du second réservoir,
- la seconde conduite comprend une extrémité reliant la partie inférieure du premier réservoir à la partie supérieure du second réservoir,
- le second réservoir comprend un système de pressurisation du réservoir comprenant une conduite reliant les parties inférieure et supérieur du réservoir et munie d'un réchauffeur et d'un ensemble de vanne(s).

L'invention concerne également un procédé de transfert de fluide cryogénique conformément à la revendication 1, pour lequel, dans des formes de réalisation:
- l'étape d'équilibrage de pression est maintenue jusqu'à ce que la différence de pression entre les deux réservoirs atteint un seuil déterminé, par exemple compris entre zéro et un bar,
- le procédé comprend, simultanément à l'étape de transfert de liquide du premier réservoir vers le second réservoir par la pompe, une étape de pressurisation du second et réservoir et/ou du premier réservoir,
- l'étape de pressurisation est réalisée par un système de pressurisation du second réservoir ou du premier réservoir comprenant une conduite reliant les parties inférieure et supérieur dudit réservoir et munie d'un ensemble de vanne(s) et d'un réchauffeur.

L'invention peut concerner également tout dispositif ou procédé alternatif comprenant toute combinaison des caractéristiques ci-dessus ou ci-dessous dans le cadre des revendications.

D'autres particularités et avantages apparaîtront à la lecture de la description ci-après, faite en référence aux figures dans lesquelles :
[Fig. 1] représente une vue schématique et partielle illustrant la structure et le fonctionnement d'un exemple de dispositif selon l'invention dans une première étape possible d'utilisation,
[Fig. 2] représente le même dispositif dans une autre configuration de fonctionnement,
[Fig. 3] représente le même dispositif dans une autre configuration de fonctionnement.
[Fig. 4] représente une vue schématique et partielle illustrant la structure et le fonctionnement d'un autre exemple de dispositif selon l'invention.

Le dispositif 1 de transfert de fluide cryogénique comprend un premier réservoir 2 de distribution de fluide cryogénique, par exemple un réservoir 2 mobile monté sur une semi-remorque.

Classiquement, le premier réservoir 2 stocke un fluide cryogénique, par exemple de l'hydrogène, avec une phase liquide en partie inférieure et une phase gazeuse en partie supérieure.

Le dispositif 1 comprend un second réservoir cryogénique 3 de réception du même fluide, par exemple fixe, abritant ou destiné à abriter un fluide cryogénique avec une phase liquide en partie inférieure et une phase gazeuse en partie supérieure. Le dispositif 1 comprend un circuit de transfert de fluide apte à relier le premier 2 et le second 3 réservoir. Ce circuit de transfert comprend une première conduite 4 ayant deux extrémités reliées respectivement aux parties supérieures des premier 2 et le second 3 réservoirs. Cette première conduite 4 comprenant au moins une vanne 5 (et par exemple de préférence au moins deux vannes en série), et dont une extrémité est reliée au second 3 réservoir, comprend des organes de liaison détachable pour permettre des raccordements successifs à divers réservoirs à alimenter en fluide.

Le circuit de transfert comprend une seconde 6 conduite apte à relier la partie inférieure du premier 2 réservoir au second 3 réservoir (en partie inférieure et/ou supérieure). Dans l'exemple représente, la seconde 6 conduite comprend deux extrémités aval reliées respectivement aux parties inférieure et supérieure du second 3 réservoir. La seconde 6 conduite de transfert comprend une pompe 7 comprenant une entrée reliée au premier 2 réservoir et une sortie reliée au second 3 réservoir. Cette seconde 6 conduite comprend de préférence un ensemble de vanne(s) permettant d'interrompre ou d'autoriser le transfert de liquide flux du premier 2 réservoir vers le second 3 réservoir. Comme précédemment, au moins à son ou ses extrémités aval reliées au second 3 réservoir, la seconde 6 conduite comprend des organes de liaison détachables pour permettre des raccordements successifs à divers réservoirs à alimenter.

Comme décrit plus en détail ci-après, la pompe 7 et l'ensemble de vanne 5 de la première conduite 4 sont configurées pour assurer une mise en relation fluidique des parties supérieures (phases gazeuses) des premier 2 et second 3 réservoirs lors d'un transfert de liquide du premier réservoir 2 vers le second réservoir 3 par la pompe 7.

La mise en relation des ciels gazeux des deux réservoirs 2, 3 pendant le pompage améliore l'efficacité thermique et hydraulique du transfert de fluide dans une procédure séquentielle optimisée. Ceci permet rend optionnelle l'utilisation d'un réchauffeur atmosphérique sur le premier réservoir 2 et permet de valoriser le ciel gazeux du second réservoir 3 tout en améliorant la qualité de la molécule livrée et les rendements volumétriques des livraisons.

Ainsi, pendant que la pompe 7 fait circuler du liquide du premier réservoir 2 vers le deuxième réservoir 3, la seconde conduite 6 permet au gaz "en surplus" présent dans le second réservoir 3 de circuler par différentiel de pression vers le premier réservoir 2, notamment pour combler le volume laissé libre par le soutirage de liquide.

Un exemple d'utilisation va être décrit ci-dessous.

Dans le cas d'une livraison de gaz liquéfié tel que de l'hydrogène par exemple, le premier réservoir 2 peut arriver sur le site du second réservoir 3. Le premier réservoir 2 a par exemple une pression interne comprise entre 1 et 6 bara. L'opérateur peut raccorder les deux réservoirs 2, 3, avec les première 4 et seconde 6 conduites. Lors de ce raccordement les ensembles de vannes sont fermées.

De préférence, des opérations d'inertage et/ou de balayage et/ou de refroidissement des conduites 4, 6 sont ensuite réalisées.

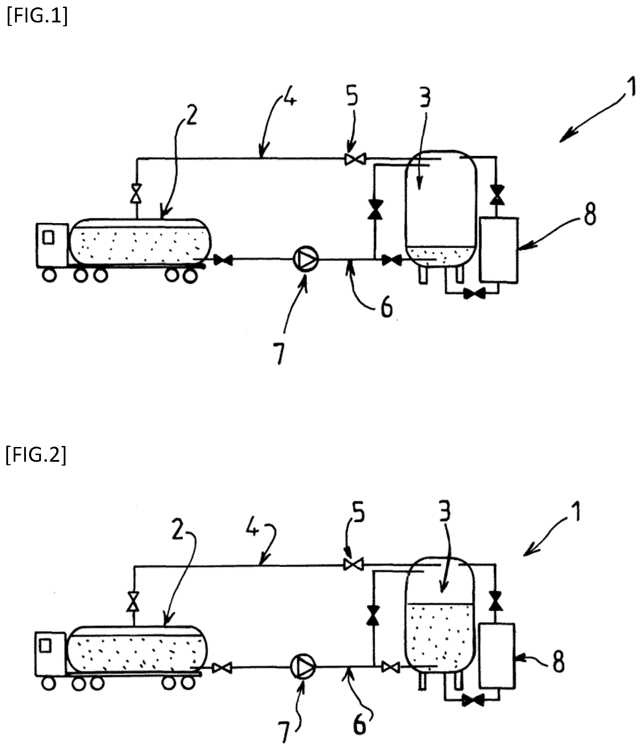

La ou les vannes 5 de la première conduite 4 est (sont) ouverte (s). Un équilibrage de pression est réalisé entre les deux réservoirs 2, 3 (cf. [Fig.1]).

De préférence lorsque la différence de pression entre les deux réservoirs 2, 3 est réduite à près de 0 bar (ou à une valeur déterminée inférieure à 1 bar par exemple), la pompe 7 peut ensuite être mise en marche.

Ceci permet de profiter de la pression du second réservoir 3 pour augmenter la pression à l'admission de la pompe et optimiser le NPSH (perte de charge d'entrée) de la pompe 7.

Le point d'équilibrage de pression entre les deux réservoirs 2, 3 peut être à une pression intermédiaire entre les deux pressions initiales des deux réservoirs 2, 3, typiquement entre 2 et 8 bar. Cette pression d'équilibrage dépend notamment de la pression initiale des deux réservoirs 2, 3, de leur niveau liquide et de leur volumes respectifs. Le premier réservoir 2 aura généralement une pression légèrement plus basse que la pression du second réservoir 3. La pompe peut ensuite être mise en marche et les vannes correspondantes ouvertes pour transférer du liquide (cf. [Fig.2]).

La pompe 7 est de préférence configurée pour compenser les pertes de charge de la ligne liquide (seconde conduite 6) et de la ligne gaz (première conduite 4). Notamment la première conduite 4 pourra être isolée thermiquement afin de réduire les pertes de charge.

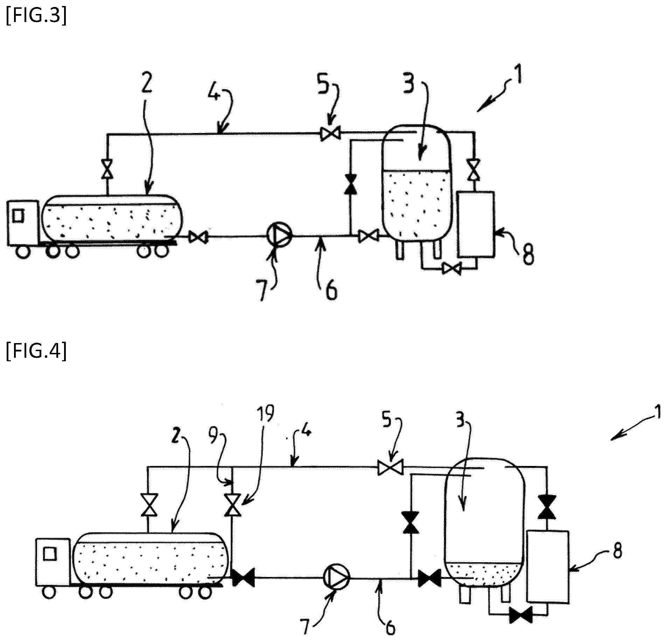

Si le NPSH de la pompe 7 devient insuffisant lors du transfert, il est possible d'utiliser optionnellement un réchauffeur atmosphérique situé par exemple sur le site du second réservoir 3 cf. [Fig.3] (ou sur le premier réservoir 2 ou les deux simultanément) pour pressuriser les ciels gazeux des deux réservoirs 2, 3 mis en commun par une relation fluidique.

Par exemple, le second réservoir 3 comprend un système 8 de pressurisation comprenant une conduite reliant les parties inférieure et supérieur dudit réservoir et munie d'un ensemble de vanne(s) et d'un réchauffeur atmosphérique (échangeur de chaleur de réchauuffage).

La pompe 7 est préférablement une pompe de type centrifuge simple ou multi-étagée avec une vitesse spécifique choisie pour augmenter le rendement isentropique pour une différence de pression relativement faible. Elle peut être installée sur le premier réservoir 2 ou sur le site du second réservoir 3, de préférence dans un récipient isolé thermiquement ou intégrée directement dans la structure interne d'un réservoir 2, 3 isolé thermiquement. Sa puissance électrique est de préférence inférieure à 10kW.

Par exemple, la pompe 7 peut être une pompe du type immergée en partie dans le liquide cryogénique pompé dans une boîte froide (le moteur de la pompe étant hors boite froide) ou une pompe du type totalement isolée dans une boîte froide (isolée sous vide). Par exemple, la pompe 7 peut être immergée dans une réserve de fluide ("sump") c'est-à-dire dans un relativement petit réservoir liquide intermédiaire dédié (type "cryostat" par exemple). De même, la pompe 7 pourrait être immergée directement (au moins en partie) dans l'un des deux réservoirs 2, 3 précités (pompe intégrée dans ce cas au moins partiellement à un réservoir). Tout autre agencement de pompe(s) peut être envisagé.

Ainsi, bien qu'étant de structure simple et peu coûteuse, l'invention présente de nombreux avantages.

Ainsi, l'introduction de chaleur dans le système est minimisée car le gaz évaporé du second réservoir 3 est utilisé en complément de la pompe 7 de transfert. La pompe 7 ne fournit qu'un faible différentiel de pression (quelques bar). La perte de vaporisation (boil-off) est donc minimale sur la chaîne logistique. Le ciel gazeux du second réservoir 3 est valorisé. Ce gaz n'est pas mis à l'évent.

De plus, la qualité de la molécule livrée est améliorée (température de livraison plus basse). Des livraisons multiples avec un seul réservoir 2 mobile sont plus efficaces. La solution ne nécessite pas de consommation de liquide pour une pressurisation. En outre, les temps d'immobilisation sont réduits car le temps de pressurisation est réduit.

La solution permet une augmentation possible du débit de transfert tout en conservant des conditions de pompage relativement stables. De plus, les débits de transfert sont indépendants des conditions météorologiques. La solution réduit sensiblement ou supprime le nuage cryogénique et la condensation d'oxygène liquide sous les réservoirs 2 mobiles de livraison..

Les procédures pour les opérateurs de livraison sont de plus simplifiées.

Les deux réservoirs 2, 3 opérant à relativement plus basse pression, ceci permet potentiellement de diminuer les contraintes mécaniques de dimensionnement (gain en poids, en matière, en temps de mise en froid et en coût).

Il n'est ainsi plus nécessaire d'équiper le premier réservoir 2 d'un réchauffeur atmosphérique ou les dimensions de ce dernier peuvent être fortement diminuées.

La consommation électrique de la pompe 7 de transfert liquide est nettement inférieure à celle d'un compresseur gaz qui pourrait être utilisé sur la conduite 4 reliant les deux ciels gazeux, d'autant plus que les conditions du procédé (température notamment) en entrée du compresseur sont beaucoup plus variables qu'en entrée de la pompe.

Dans le mode de réalisation de la [Fig.4], le dispositif 1 comprend une troisième conduite 9 reliant la première conduite 4 à l'extrémité inférieure du premier réservoir 2. Cette troisième conduite 9 peut faire partie du circuit de transfert et/ou peut être solidaire du premier réservoir 2.

Comme illustré, cette troisième conduite 9 est munie de préférence d'une vanne 19 permettant, en position ouverte, de dépressuriser le ciel gazeux du second réservoir 3 dans la phase liquide du premier réservoir 2. C'est-à-dire que cette troisième conduite 9 peut permettre de récupérer des vapeurs du second réservoir 3 (via la première conduite 4) dans la phase liquide du premier réservoir 2 (en les condensant).

Après un tel équilibrage, le liquide peut être soutiré du premier réservoir 2 via la seconde conduit 6 (et la pompe 7).

Ceci peut conduite à réchauffer la phase liquide dans le premier réservoir 2, mais, dans certaines applications ceci peut être attendu et avantageux (par exemple à une pression de 5 bar).

## Revendications

1. Procédé de transfert de fluide cryogénique utilisant un dispositif de transfert de fluide cryogénique comprenant un premier réservoir (2) de distribution de fluide cryogénique, ledit premier réservoir (2) stockant un fluide cryogénique avec une phase liquide inférieure et une phase gazeuse supérieure, un second réservoir cryogénique (3) de réception abritant un fluide cryogénique comprenant une phase liquide inférieure et une phase gazeuse supérieure, un circuit de transfert de fluide reliant le premier (2) et le second (3) réservoir, le circuit de transfert comprenant une première conduite (4) reliant les parties supérieures des premier (2) et second (3) réservoirs et comprenant au moins une vanne (5), le circuit de transfert comprenant une seconde (6) conduite reliant la partie inférieure du premier (2) réservoir au second (3) réservoir, la seconde (6) conduite de transfert comprenant une pompe (7) comprenant une entrée reliée au premier (2) réservoir et une sortie reliée au second (3) réservoir et en ce que la pompe (7) et la au moins une vanne (5) de la première conduite (4) sont configurées pour assurer une mise en relation fluidique des parties supérieures des premier (2) et second (3) réservoirs par ouverture de la au moins une vanne (5) lors d'un transfert de liquide du premier réservoir (2) vers le second réservoir (3) par la pompe (7), le procédé assurant un transfert de fluide cryogénique entre le premier réservoir (2) de distribution de fluide cryogénique et le second réservoir cryogénique le procédé comprenant une étape de transfert de liquide du premier réservoir (2) vers le second réservoir (3) par la pompe (7) et, simultanément une mise en relation fluidique des parties supérieures des premier (2) et second (3) réservoirs par ouverture de la au moins une vanne (5) de la première conduite (4), et comportant en outre, préalablement à l'étape de transfert de liquide, une étape d'équilibrage de pression entre les deux réservoirs (2, 3) cryogéniques durant laquelle uniquement les parties supérieures des premier (2) et second (3) réservoirs sont mises en relation fluidique par ouverture de la au moins une vanne (5) de la première conduite (4), et, lors de l'étape de transfert de liquide du premier réservoir (2) vers le second réservoir (3) par la pompe (7), le liquide étant transféré dans la partie inférieure liquide et/ou dans la partie supérieure gazeuse du second (3) réservoir, et la seconde (6) conduite comprenant une extrémité reliant la partie inférieure du premier (2) réservoir à la partie inférieure du second (3) réservoir, et la seconde (6) conduite comprenant une extrémité reliant la partie inférieure du premier (2) réservoir à la partie supérieure du second (3) réservoir.

2. Procédé selon la revendication 1, **caractérisé en ce que** l'étape d'équilibrage de pression est maintenue jusqu'à ce que la différence de pression entre les deux réservoirs (2, 3) atteingne un seuil déterminé, par exemple compris entre zéro et un bar.

3. Procédé selon l'une quelconque des revendications 1 à 2, **caractérisé en ce qu'**il comprend, simultanément à l'étape de transfert de liquide du premier réservoir (2) vers le second réservoir (3) par la pompe (7), une étape de pressurisation du second et réservoir (3) et/ou du premier réservoir (2).

4. Procédé selon la revendication 3, **caractérisé en ce que** l'étape de pressurisation est réalisée par un système (8) de pressurisation du second réservoir (3) ou du premier réservoir (2) comprenant une conduite reliant les parties inférieure et supérieur dudit réservoir et munie d'un ensemble de vanne(s) et d'un réchauffeur.

5. Procédé selon l'une quelconque des revendications 1 à 4, **caractérisé en ce que** le second (3) réservoir comprend un système (8) de pressurisation du réservoir (3) comprenant une conduite reliant les parties inférieure et supérieur du réservoir (3) et munie d'un réchauffeur et d'un ensemble de vanne(s).

6. Procédé selon l'une quelconque des revendications 1 à 5, **caractérisé en ce qu'**il comprend, préalablement à l'étape de transfert de liquide du premier réservoir (2) vers le second réservoir (3) par la pompe (7), une étape d'équilibrage de pression entre la partie supérieure du second réservoir (3) et la partie inférieure du premier réservoir (2).

7. Dispositif de transfert de fluide cryogénique comprenant un premier réservoir (2) de distribution de fluide cryogénique, ledit premier réservoir (2) stockant un fluide cryogénique avec une phase liquide inférieure et une phase gazeuse supérieure, un second réservoir cryogénique (3) de réception abritant un fluide cryogénique comprenant une phase liquide inférieure et une phase gazeuse supérieure, un circuit de transfert de fluide reliant le premier (2) et le second (3) réservoir, le circuit de transfert comprenant une première conduite (4) reliant les parties supérieures des premier (2) et second (3) réservoirs et comprenant au moins une vanne (5), le circuit de transfert comprenant une seconde (6) conduite reliant la partie inférieure du premier (2) réservoir au second (3) réservoir, la seconde (6) conduite de transfert comprenant une pompe (7) comprenant une entrée reliée au premier (2) réservoir et une sortie reliée au second (3) réservoir et en ce que la pompe (7) et la au moins une vanne (5) de la première conduite (4) sont configurées pour assurer une mise en relation fluidique des parties supérieures des premier (2) et second (3) réservoirs par ouverture de la au moins une vanne (5) lors d'un transfert de liquide du premier réservoir (2) vers le second réservoir (3) par la pompe (7), le dispositif comprenant en outre une troisième conduite (9) reliant l'extrémité supérieure du second réservoir (3) à l'extrémité inférieure du premier réservoir (2), la troisième conduite (9) comprenant une vanne (19).

## Patentansprüche

1. Verfahren zur Überführung von kryogenem Fluid unter Verwendung einer Vorrichtung zur Überführung von kryogenem Fluid, umfassend einen ersten Behälter (2) zur Abgabe von kryogenem Fluid, wobei der erste Behälter (2) ein kryogenes Fluid mit einer unteren flüssigen Phase und einer oberen gasförmigen Phase speichert, einen zweiten Kryobehälter (3) zur Aufnahme, der ein kryogenes Fluid enthält, das eine untere flüssige Phase und eine obere gasförmige Phase umfasst, einen Fluidüberführungskreis, der den ersten (2) und den zweiten (3) Behälter verbindet, wobei der Überführungskreis eine erste Leitung (4) umfasst, welche die oberen Teile des ersten (2) und zweiten (3) Behälters verbindet und mindestens ein Ventil (5) umfasst, wobei der Überführungskreis eine zweite Leitung (6) umfasst, die den unteren Teil des ersten (2) Behälters mit dem zweiten (3) Behälter verbindet, wobei die zweite (6) Überführungsleitung eine Pumpe (7) umfasst, die einen mit dem ersten (2) Behälter verbundenen Einlass und einen mit dem zweiten (3) Behälter verbundenen Auslass umfasst, und dadurch, dass die Pumpe (7) und das mindestens eine Ventil (5) der ersten Leitung (4) dazu ausgebildet sind, ein fluidisches Verbinden der oberen Teile des ersten (2) und zweiten (3) Behälters durch Öffnen des mindestens einen Ventils (5) bei einer Überführung von Flüssigkeit aus dem ersten (2) in den zweiten Behälter (3) durch die Pumpe (7) zu gewährleisten, wobei das Verfahren eine Überführung von kryogenem Fluid zwischen dem ersten Behälter (2) zur Abgabe von kryogenem Fluid und dem zweiten Kryobehälter gewährleistet, wobei das Verfahren einen Schritt des Überführens von Flüssigkeit aus dem ersten Behälter (2) in den zweiten Behälter (3) durch die Pumpe (7) umfasst und gleichzeitig ein fluidisches Verbinden der oberen Teile des ersten (2) und zweiten (3) Behälters durch Öffnen des mindestens einen Ventils (5) der ersten Leitung (4), und wobei es ferner, vor dem Schritt des Überführens von Flüssigkeit, einen Schritt des Druckausgleichs zwischen den beiden Kryobehältern (2, 3) beinhaltet, während dessen nur die oberen Teile des ersten (2) und zweiten (3) Behälters durch Öffnen des mindestens einen Ventils (5) der ersten Leitung (4) fluidisch verbunden werden, und wobei, bei dem Schritt des Überführens von Flüssigkeit aus dem ersten Behälter (2) in den zweiten Behälter (3) durch die Pumpe (7) die Flüssigkeit in den unteren flüssigen Teil und/oder in den oberen gasförmigen Teil des zweiten (3) Behälters überführt wird, und wobei die zweite (6) Leitung ein Ende umfasst, das den unteren Teil des ersten (2) Behälters mit dem unteren Teil des zweiten (3) Behälters verbindet, und wobei die zweite (6) Leitung ein Ende umfasst, das den unteren Teil des ersten (2) Behälters mit dem oberen Teil des zweiten (3) Behälters verbindet.

2. Verfahren nach Anspruch 1, **dadurch gekennzeichnet, dass** der Schritt des Druckausgleichs aufrechterhalten wird, bis die Druckdifferenz zwischen den beiden Behältern (2, 3) einen bestimmten Schwellenwert erreicht, der zum Beispiel zwischen null und einem bar beträgt.

3. Verfahren nach einem der Ansprüche 1 bis 2, **dadurch gekennzeichnet, dass** es gleichzeitig zu dem Schritt des Überführens von Flüssigkeit aus dem ersten Behälter (2) in den zweiten Behälter (3) durch die Pumpe (7) einen Schritt des Druckbeaufschlagens des zweiten Behälters (3) und/oder des ersten Behälters (2) umfasst.

4. Verfahren nach Anspruch 3, **dadurch gekennzeichnet, dass** der Schritt des Druckbeaufschlagens durch ein System (8) zur Druckbeaufschlagung des zweiten Behälters (3) oder des ersten Behälters (2) ausgeführt wird, das eine Leitung umfasst, die den unteren und oberen Teil des Behälters verbindet und mit einer Anordnung aus einem oder mehreren Ventil (en) und einem Erhitzer versehen ist.

5. Verfahren nach einem der Ansprüche 1 bis 4, **dadurch gekennzeichnet, dass** der zweite (3) Behälter ein System (8) zur Druckbeaufschlagung des Behälters (3) umfasst, das eine Leitung umfasst, die den oberen und unteren Teil des Behälters (3) verbindet und mit einem Erhitzer und einer Anordnung aus einem oder mehreren Ventil(en) versehen ist.

6. Verfahren nach einem der Ansprüche 1 bis 5, **dadurch gekennzeichnet, dass** es vor dem Schritt des Überführens von Flüssigkeit aus dem ersten Behälter (2) in den zweiten Behälter (3) durch die Pumpe (7) einen Schritt des Druckausgleichs zwischen dem oberen Teil des zweiten Behälters (3) und dem unteren Teil des ersten Behälters (2) umfasst.

7. Vorrichtung zur Überführung von kryogenem Fluid, umfassend einen ersten Behälter (2) zur Abgabe von kryogenem Fluid, wobei der erste Behälter (2) ein kryogenes Fluid mit einer unteren flüssigen Phase und einer oberen gasförmigen Phase speichert, einen zweiten Kryobehälter (3) zur Aufnahme, der ein kryogenes Fluid enthält, das eine untere flüssige Phase und eine obere gasförmige Phase umfasst, einen Fluidüberführungskreis, der den ersten (2) und den zweiten (3) Behälter verbindet, wobei der Überführungskreis eine erste Leitung (4) umfasst, welche die oberen Teile des ersten (2) und zweiten (3) Behälters verbindet und mindestens ein Ventil (5) umfasst, wobei der Überführungskreis eine zweite (6) Leitung umfasst, die den unteren Teil des ersten (2) Behälters mit dem zweiten (3) Behälter verbindet, wobei die zweite (6) Überführungsleitung eine Pumpe (7) umfasst, die einen mit dem ersten (2) Behälter verbundenen Einlass und einen mit dem zweiten (3) Behälter verbundenen Auslass umfasst, und dadurch, dass die Pumpe (7) und das mindestens eine Ventil (5) der ersten Leitung (4) dazu ausgebildet sind, ein fluidisches Verbinden der oberen Teile des ersten (2) und zweiten (3) Behälters durch Öffnen des mindestens einen Ventils (5) bei einer Überführung von Flüssigkeit aus dem ersten (2) in den zweiten Behälter (3) durch die Pumpe (7) zu gewährleisten, wobei die Vorrichtung ferner eine dritte Leitung (9) umfasst, die das obere Ende des zweiten Behälters (3) mit dem unteren Ende des ersten Behälters (2) verbindet, wobei die dritte Leitung (9) ein Ventil (19) umfasst.

## Claims

1. Method for transferring cryogenic fluid using a device for transferring cryogenic fluid comprising a first tank (2) for distributing cryogenic fluid, said first tank (2) storing a cryogenic fluid with a lower liquid phase and an upper gas phase, a second, receiving cryogenic tank (3) accommodating a cryogenic fluid comprising a lower liquid phase and an upper gas phase, a fluid transfer circuit connecting the first (2) and the second (3) tank, the transfer circuit comprising a first pipe (4) that connects the upper parts of the first (2) and second (3) tanks and comprises at least one valve (5), the transfer circuit comprising a second pipe (6) that connects the lower part of the first tank (2) to the second tank (3), the second transfer pipe (6) comprising a pump (7) that comprises an inlet connected to the first tank (2) and an outlet connected to the second tank (3) and in that the pump (7) and the at least one valve (5) of the first pipe (4) are configured to place the upper parts of the first (2) and second (3) tanks in fluidic communication by opening the at least one valve (5) during a transfer of liquid from the first tank (2) to the second tank (3) by way of the pump (7), the method ensuring a transfer of cryogenic fluid between the first tank (2) for distributing cryogenic fluid and the second cryogenic tank, the method comprising a step of transferring liquid from the first tank (2) to the second tank (3) by way of the pump (7) and, simultaneously, placing the upper parts of the first (2) and second (3) tanks in fluidic communication by opening the at least one valve (5) of the first pipe (4), and further involving, prior to the step of transferring liquid, a step of pressure equalizing between the two cryogenic tanks (2, 3) during which only the upper parts of the first (2) and second (3) tanks are placed in fluidic communication by opening the at least one valve (5) of the first pipe (4), and, during the step of transferring liquid from the first tank (2) to the second tank (3) by way of the pump (7), the liquid being transferred into the lower liquid part and/or into the upper gas part of the second tank (3), and the second pipe (6) comprising an end connecting the lower part of the first tank (2) to the lower part of the second tank (3), and the second pipe (6) comprising an end connecting the lower part of the first tank (2) to the upper part of the second tank (3).

2. Method according to Claim 1, **characterized in that** the step of pressure equalizing is maintained until the difference in pressure between the two tanks (2, 3) reaches a determined threshold, for example of between zero and one bar.

3. Method according to either one of Claims 1 and 2, **characterized in that** it comprises, at the same time as the step of transferring liquid from the first tank (2) to the second tank (3) by way of the pump (7), a step of pressurizing the second tank (3) and/or the first tank (2).

4. Method according to Claim **3, characterized in that** the pressurizing step is carried out by a system (8) for pressurizing the second tank (3) or the first tank (2), comprising a pipe that connects the lower part and upper part of said tank and is provided with a set of one or more valves and a heater.

5. Method according to any one of Claims 1 to 4, **characterized in that** the second tank (3) comprises a system (8) for pressurizing the tank (3), comprising a pipe that connects the lower part and upper part of the tank (3) and is provided with a heater and a set of one or more valves.

6. Method according to any one of Claims 1 to 5, **characterized in that** it comprises, prior to the step of transferring liquid from the first tank (2) to the second tank (3) by way of the pump (7), a step of pressure equalizing between the upper part of the second tank (3) and the lower part of the first tank (2).

7. Device for transferring cryogenic fluid comprising a first tank (2) for distributing cryogenic fluid, said first tank (2) storing a cryogenic fluid with a lower liquid phase and an upper gas phase, a second, receiving cryogenic tank (3) accommodating a cryogenic fluid comprising a lower liquid phase and an upper gas phase, a fluid transfer circuit connecting the first (2) and the second (3) tank, the transfer circuit comprising a first pipe (4) that connects the upper parts of the first (2) and second (3) tanks and comprises at least one valve (5), the transfer circuit comprising a second pipe (6) that connects the lower part of the first tank (2) to the second tank (3), the second transfer pipe (6) comprising a pump (7) that comprises an inlet connected to the first tank (2) and an outlet connected to the second tank (3) and in that the pump (7) and the at least one valve (5) of the first pipe (4) are configured to place the upper parts of the first (2) and second (3) tanks in fluidic communication by opening the at least one valve (5) during a transfer of liquid from the first tank (2) to the second tank (3) by way of the pump (7), the device further comprising a third pipe (9) that connects the upper end of the second tank (3) to the lower end of the first tank (2), the third pipe (9) comprising a valve (19).
